# EUROPEAN PATENT APPLICATION

(11) **EP 1 225 520 A2**
(43) Date of publication of application: **24.07.2002**
(21) Application number: 02000598.9
(22) Date of filing: 10.01.2002
(51) Int. Cl.: G06F 17/30, G06F 17/60

(54) **Method of generating digital items for electronic commerce activities**

(30) Priority: 12.01.2001 KR 2001001779
(71) Applicant: LG Electronics, Inc., Seoul (KR)
(72) Inventor: Song, Young Won, Seoul (KR); Chang, Do Im, Geumchun-gu, Seoul (KR)
(74) Representative: Heinze, Ekkehard, Dipl.-Phys. Dr.

(57) **Abstract**

The present invention relates to the definition of Digital Item as the unit of manipulation of multimedia data for electronic commerce activities such as creation, mining, transaction, transfer, management, storage, consumption, ctc., of multimedia data.

According to the present invention, Digital Item is specified as the fundamental unit of manipulation of multimedia data in the electronic commerce environment. Digital Item includes atomic Digital Item called component in the present invention that is not divided into any longer and packaged Digital Item. This packaged Digital Item is generated in a recursive manner using atomic Digital Items or already packaged Digital Items. The packaged Digital Item composed of two levels of structured form called item and container. Digital Item of the present invention has a layered structure comprising (a) component, (b) item, and (c) container. Component includes resource such as audio, video, graphic, text, etc., anchor for designating the resource, descriptor for describing the resource, murCondition as information on management and use rule conditions for the resource, opCondition as information on operational use conditions of the resource, eventReport for describing event to be reported in connection with the resource, userPreference for describing user preference information on the resource, and rescrvedMetadata as metadata additionally required for Digital Item definition model in the future. Item is provided in a packaged form of higher layer including any component or sub item. Container is provided in a packaged form of higher layer including any item or sub container.

## Description

### BACKGROUND OF THE INVENTION

### 1. Field of the Invention

The present invention relates to generating Digital Item as the unit of manipulation of multimedia data for an electronic commerce activities such as creation, mining, transaction, transfer, management, storage, consumption, etc., of multimedia data.

### 2. Description of the Prior Art

The present invention defines Digital Item as the unit of manipulation of multimedia data for the electronic commerce activities. Particularly, the present invention defines the Digital Item unit of manipulation of multimedia data in creation, mining, transaction, transfer, management, storage, consumption, etc., of multimedia data for the electronic commerce activities.

For performing activities associated with the electronic commerce including creation, mining, transaction, transfer, management, storage, consumption, etc., of multimedia data, there arises a need of flexibility, consistency and compatibility rule in connection with the unit of manipulation of multimedia data.

Particularly, in the light of a trend of the increase of the electronic commerce activities in virtue of the development of Internet, the absence of the model defining the unit of manipulation of multimedia data for the electronic commerce activities can invite potential causes invoking disturbance in the electronic commerce activities.

According to this, considering at maximum role relations among all the Users (referring to all subjects associated with business models of the electronic commerce environment such as Digital Item creators, providers, distributors, consumers, intellectual property exercisers, industrial property exercisers, financial service provider, electronic commercial transaction supervisors, etc.), the MPEG-21 in ISO/IEC SC29/WG11 specifics Digital Item definition model and efforts have been made for adopting an international standard according to which Digital Items have flexibility, consistency, and compatibility based on the electronic commerce activities or the association with the other MPEG-21 multimedia framework element technologies.

Accordingly, considering the issues for building business models for the electronic commerce activities or the association with the other MPEG-21 multimedia framework element technologies, it is required to provide definition model of Digital Item so that the electronic commerce activities can be accomplished regardless of various types of network and terminal environment.

Such a Digital Item definition model is required to have compatibility, consistency and flexibility as the unit of multimedia data in the electronic commerce activities including creation, mining, transaction, transfer, managament, storage, consumption, etc., of multimedia data required in the electronic commerce environment.

### SUMMARY OF THE INVENTION

Accordingly, the present invention suggests Digital Item definition model with flexibility, consistency and compatibility required in the electronic commerce environment including different subjects (Users), networks, terminals, etc.

Particularly, the present invention suggests Digital Item definition model with flexibility, consistency, and compatibility and a method of generating the same manner (which is capable of minimizing a possible disturbance in the electronic commerce activities among all the subjects associated with electronic commerce Users - electronic commerce business model) and accomplishing under a consistent rule a compatible electronic commerce activities for multimedia data among all the subjects associated with ' the electronic commerce business model.

The present invention provides a method of generating Digital Item for electronic commerce activities comprising the steps of: selecting resources for the electronic commerce activities of multimedia data; and generating Digital Item as the unit of manipulation of electronic commerce activities for a corresponding multimedia resource defined by including anchor, descriptor, opCondition, murCondition, eventReport, userPreference, and reservedMetadata.

Preferably, the Digital Item includes the lowest atomic Digital Item that is not divided into any longer and packaged Digital Item with each item configuring a recurrent layered structure for each level.

Preferably, the packaged Digital Item is defined to include the atomic Digital Item and/or sub packaged Digital Item or anchor for designating them.

Preferably, in order to configure the recurrent layered structure, the atomic Digital Item as the lowest layer is defined as component, the packaged Digital Item as the middle layer including the component or any sub packaged Digital Item or information (anchor) for designating them is defined as item, and the packaged Digital Item as the highest layer including item or any sub container or information (anchor) for designating them is defined as container.

Preferably, when Digital Item configures a recurrent layered structure, the higher level of packaged Digital Item is defined to include both of syntactically same level of the packaged Digital Item and the lower level of item or include the anchor for designating the Digital Item.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a view showing a data structure of Digital Item definition model according to the present invention;
Fig. 2 is a view showing one example of component elements of Digital Items according to the present invention; and
Fig. 3 is a view representing Digital Item definition model of the present invention expressed using EBNF (Extended Backus-Naur Form).

### DESCRIPTION OF THE PREFERRED EMBODIMENTS

Hereinafter, a method of generating Digital Item for the electronic commerce activities according to the present invention will be described in detail with respect to the accompanied drawings.

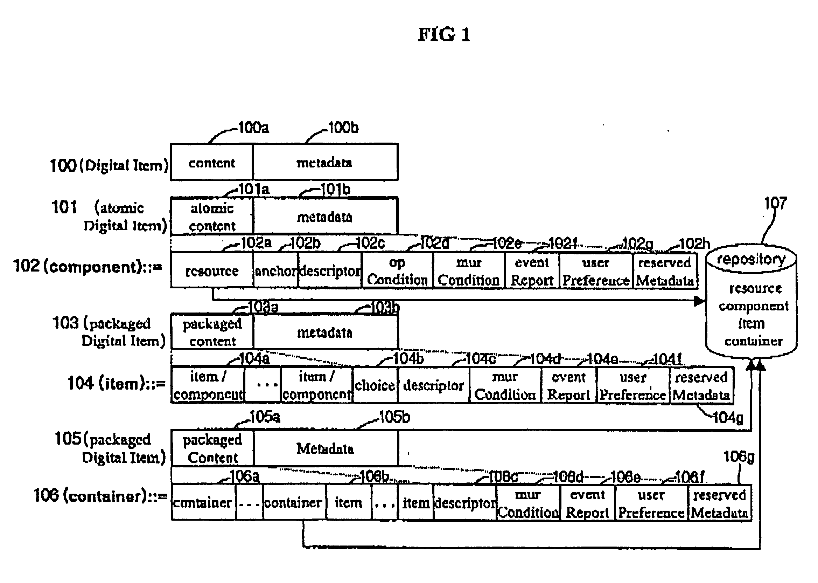

Fig. 1 is a view showing a data structure of Digital Item definition model according to the present invention.

As shown in Fig. 1, Digital Items of the present invention are basically divided into atomic Digital Item and packaged Digital Item.

The atomic Digital Item is a basic Digital Item that is not divided into any longer. This packaged Digital Item is configured to include the atomic Digital Item or any sub packaged Digital Item or anchors designating each of items.

Although the packaged Digital Item has a recurrent layered structure, it can be extended over two levels schematically and the number of the recurrence has no limitation.

As shown in Fig. 1, the Digital Item definition model can be defined as three levels of layered structure such as the container of the highest layer, the item of the middle layer and the component of the lowest layer, in consideration of the practical use.

Referring to Fig. 1, the structure of the Digital Item definition model of the -. present invention will be described.

Digital Item 100 consists of content 100a and metadata 100b. Digital Item of the lowest layer that is not divided into any longer is defined as atomic Digital Item 101 in the present invention. Atomic Digital Item 101 consists of atomic content 101a and metadata 101b.

Content 101a corresponds to multimedia resource and metadata 101b is a data for describing multimedia resource.

Component 102 that is defined to include content 101a and metadata 101b consists of the lowest layer in recurrent layered structure which will be described below, and will be used as data of the minimal unit in the Digital Item configuration.

Component 102 is defined to include the following elements: multimedia resource 102a such as audio, video, image, and graphic, anchor 102b designating these resource, descriptor 102c, opCondiuon 102d, murCondition 102c, eventReport 102f, userPreference 102g, and reservedMetadata 102h.

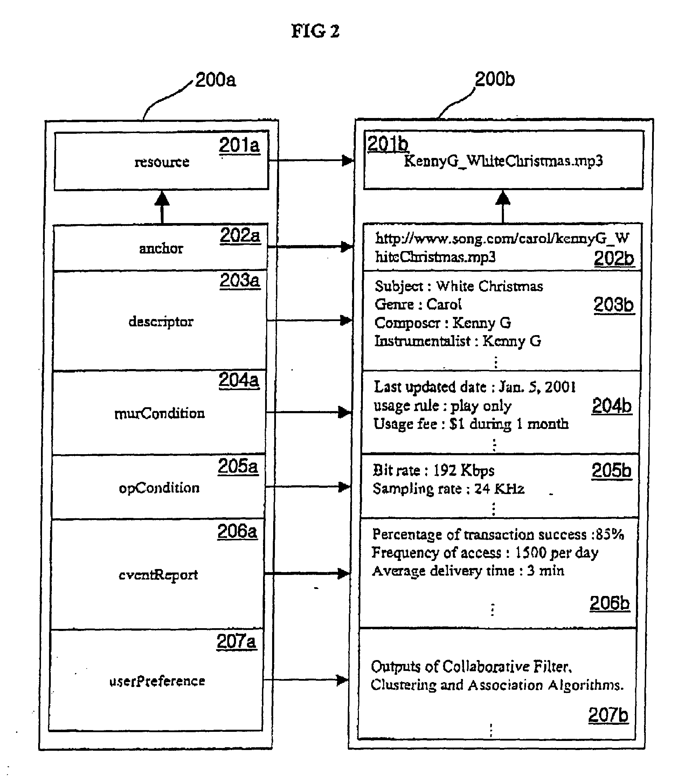

Fig. 2 is a view showing one example of component elements of Digital Item definition model according to the present invention.

Referring to exemplary use of component elements of Fig. 2, detailed description will be given below.

First, anchor 102b at component level designates atomic resource 102a and is defined as a reference being an identifier designating uniquely atomic resource, a descriptor describing what this particular anchor is, and an opCondition capable of describing usage format (or protocol) of anchor. Namely, anchor 102a is meant to include the reference, the descriptor and the opCondition.

Referring to component element definition 200a and an instance content 200b represented by component clement 200a as shown in Fig. 2, resource 201a is Kenny G_White Christmas.mp3 file 201b and an identifier of anchor 202a is URL 202b designating the resource.

In addition, descriptor 102c at component level is description on details of resource 102a, opCondition 102d is description on operational use conditions of resource 102a, and murCondition 102e is description on conditions for management and use rule.

Referring to component element definition 200a and an instance content 200b represented by component element 200a as shown in Fig. 2, descriptor 203a is description on the content 203b (title, type, writer, performer, etc.) of resource 201a. In addition, murCondition 204a is description on conditions 204b for management and use rule (update date, use rule, usage fee...) of resource 201a and opCondition 205a is description on operational conditions 205b such as transmission rate and sampling rate.

In addition, eventReport 102f is description on event to be reported in connection with resource 201b and userPreference 102g has user preference information on resource 201a.

Referring to component element definition 200a and an instance content 200b represented by component element 200a as shown in Fig. 2, eventReport 206a is description on event 206b such as transaction success rate, access frequency, and average delivery time to be reparted in connection with the resource, and userPreference 207a has information related to user preference and the like on the resource.

In addition, reservedMetadata 102h at component level is element for defining metadata additionally required for Digital Item definition model in the future.

Component 102, which is atomic item as the unit of manipulation of Digital Item according to the present invention as described above, includes multimedia resource 102a, anchor 102b for designating the resource, descriptor 102c for describing the content of the resource, apCondition 102d for describing operational use conditions of the resource, murCondition 102e for describing conditions related to commercial management and use rule for the resource, eventReport 102f for describing event to be reported in connection with the resource, userPreference 102g having user preference information 102g, and reservedMetadata 102h additionally required for Digital Item definition model in the future. Component configured as described above allows unified, consistent and flexible manipulation among the subjects of the electronic commercial transaction with minimal manipulation unit of digital multimedia data in activities related to the electronic commercial transaction.

The component of the present invention is placed on the lowest layer when Digital Item definition model has a layered structure and packaged Digital Item is defined in layers higher than the lowest layer.

In addition, Fig. 1 shows the Digital Item definition model constituting three levels of layered structure, item being packaged Digital Item formed as combination of item and component and container being packaged Digital Item formed as combination of item and container.

Packaged Digital item 103 of middle layer in three levels of Digital Item definition model consists of packaged content 103a and metadata 103b and is defined as item 104 in the present invention.

In addition, packaged Digital Item 105 of highest layer in threc levels of Digital Item definition model consists of packaged content 105a and metadata 105b and is defined as container 106 in the present invention.

First, item 104 in Digital Item definition model includes component or other items 104a as packaged content, choice 104b, descriptor 104c, murCondirion 104d, eventReport 104e, userpreference 104f, and reservedMetadata 104g.

Here, packaged content 104a can include component, all of other items, or-anchor for designating the component or items.

In item 104, choice 104b is defined to include recurrent choice, descriptor, opCondition, and selection as the object of option.

Choice 104b is used for item 104 level required for selective configuration satisfying a request of user of Digital Item. Since the user generally configures item through multi-step and so layered definition of choice is required, this choice is modeled in a recurrent form.

In item 104, descriptor 104c describes the content of the packaged content 104a and murCondition 104d describes conditions related to management and use rule of the packaged content 104a.

In item 104, eventReport 104c is description on event to be reported in connection with the packaged content 104a, userPreference 104f describes information on user preference for the packaged content 104a, and reservedMetadata 104g is element for defining metadata additionally required for Digital Item definition model in the future.

Since item 104 with the structure as described above can be connected again recurrently to higher layer of container 106, item 104 can be used to configure layered structure of the Digital Item definition model.

As three levels of the Digital Item definition model are described in the example of Fig. 1, container 106 defined as highest layer will be now described.

Container 106 includes container 106a or anchor for designating the container 106a, and item 106b or anchor for designating the item 106b. Also, container 106 includes descriptor 106c for describing packaged content 106a and 106b, murCondition 106d for describing management and use rule for packaged content 106a and 106b, eventReport 106e for describing event to be reported in connection with packaged content 106a and 106b, userPreference 106f for packaged content 106a and 106b, and reservedMetadata 106g for defining metadata additionally required for Digital Item definition model in the future.

In the meantime, component 102, item 104 and container 106 can be stored in a repository 107 along with corresponding multimedia resource.

According to Digital Item definition model as shown in Fig. 1, the subjects of electronic commercial transaction can perform activities associated with the electronic commercial transaction including creation, mining, transaction, transfer, management, storage, consumption, etc., of multimedia data, with consistency, regularity and flexibility.

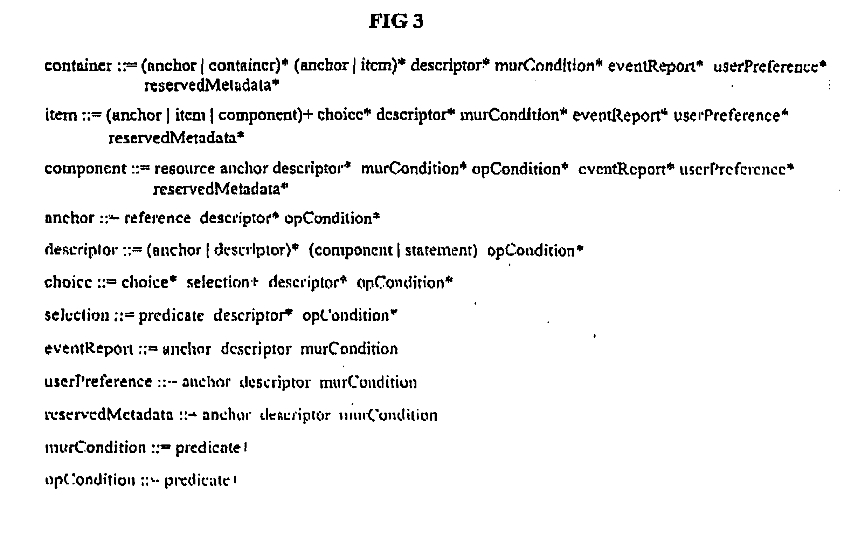

Fig. 3 shows a more detailed linguistic representation of three levels of Digital Item definition model with recurrent and layered structure as illustrated in Fig. 1 using EBNF (Extended Backus-Naur Form).

Digital Item definition model of the present invention, as shown in Fig. 3 shows details for the Digital Item structure of the present invention illustrated in Figs. I and 2 in an implicit way.

The following terms, i.e., descriptor, choice, murCondition, opCondition, eventReport, userPreference, and reservedMetadata, have the same meaning as those described in Figs. 1 and 2.

In Fig. 3, '*' means at least zero(0) or more, '+' means at least one(1) or more, and ' l' means 'OR' logical operation.

As represented in Fig. 3, container 106 which is the highest layer of Digital Item in the present invention includes the following elements:
1. at least zero(0) or more container 106a or anchor for designating the container 106a.
2. at least zero(0) or more item 106b or anchor for designating the lower level of the item 106b.
3. at least zero(0) or more descriptor 106c, murCondition 106d, eventReport 106e, userPreference 106f, and reservedMetadata 106g.

Item 104 with the level lower than that of container includes the following elements:
1. at least one (1) or more component or item 104a or anchors for designating the component or item 104a.
2. at least zero(0) or more choice 104b, descriptor 104c, murCondition 104d, eventReport 104e, userPreference 104f, and reservedMetadata 104g.

In addition, component 102 as atomic Digital Item with the level lower than that of item 104 includes the following elements:
1. atomic resource 102a, and anchor 102b for designating the resource.
2. at least zero(0) or more descriptor 102c, opCondition 102d, murCondition 102e, eventReport 102f, userPreference 102g, and reservedMetadata 102h.

Here, the resource is multimedia data such as audio, video, image, text, graphic, etc.

In Digital Item of this component level, opCondition 102d which is operational use conditions of the component is modeled unlike Digital Items of other levels. Here, since component corresponds to atom constituting item or container of Digital Item and succeeds to the definition of higher levels of Digital Item, opCondition needs not to be defined separately in the levels higher than that of component.

Anchor 102b at component level designates a multimedia resource. Also, since the higher level of packaged Digital Item at item or container level can include both of syntactically same level of packaged Digital Item and the lower level of item or include anchor for designating such items, the higher level of anchors 104a, 106a and 106b as described above can designate Digital Item required to define each of Digital Items at the item or container level.

Accordingly, in the light of Fig. 3,.anchor is defined to include reference being an identifier for designating uniquely atomic resource and each of Digital Items, at least zero(0) or more descriptor (describing what this anchor is), and at least zero(0) or more opCondition capable of describing usage format (or protocol) of anchor.

Descriptor (102c, 104c, 106c, etc.) used in all the Digital Items (component, item, container, etc.) as described above is defined to include at least zero(0) or more existing descriptor or anchor, component capable of representing the content of descriptor or statement of text format for describing the contcnt of descriptor to be defined, and at least zero(0) or more opCondition (for example, representation format) of descriptor.

Choice used only in item (104) level of Digital Item definition model is defined in the recurrent form of at least zero(0) or more choice, at least zero(0) or more descriptor, at least zero(0) or more opCondition, and at least one(1) or more selection in order to determine proper item (104).

This choice is used for item 104 level for the purpose of selective item configuration in order to adapt the Digital Item according to the various types of networks and terminals, or the user request. Since the user generally can configure item through multi-steps, so layered definition of choice is required. This choice is modeled in a recurrent form.

Also, opCondition in choice can be used to determine whether a single selection is selected (i.e., exclusive) or more than one selection are selected (i.e., inclusive).

Here, selection as an element for constituting the choice is defined to include a predicate as Boolean function represertation language, at least zero(0) or more descriptor for describing the selection, and at least zero(0) or more opCondition for describing operational use conditions (for example, switching function such as use or not use for selection itself) for the selection.

In the meantime, eventReport defined for event reporting which is one of important multimedia framework technologies of MPEG-21 is required in order to provide information on events (or actions) that can be generated by interaction of User and Digital Item. This information is used to evaluate and supervise general performance of Digital Item usage in the MPEG-21 multimedia framework

Accordingly, eventReport in Digital Item definition model of the present invention is defined to include anchor for designating a server computer for processing, managing and storing the reportable event content, descriptor for describing the content of event report, and murCondition for describing conditions related to the management and use rule of event report content

In addition, userPreference required for providing information satisfying the desire of consumer who is an end user of Digital Item can provide customized information based on the result of event report or personal user preference. UserPreference is defined to include anchor for designating the existing user preference information, descriptor for describing the content of user preference information, and murCondition capable of describing management and use rule of the user preference information.

ReservedMetadata is defined to include anchor, and descriptor, and murCondition in the same manner as eventReport and userPreference. Since reservedMetadata is defined for the purpose of reservation for extension of Digital Item metadata model, this may be not used if not desired.

MurCondition is an element required for defining container, item, component, eventReport, userPreference, and reservedMetadata,. This murCondition defines conditions for management and use rule of Digital Items or elements of present Digital Item definition model to be defined, for example, content access authority list, recent updated data, usage fee and conditions of Digital Item. The murCondition is defined using at least one(1) or more predicate which is Boolean function representation language.

In addition, opCondition for defining operational use conditions of Digital Item is optionally required for component 102, anchor, descriptor, choice and selection in the Digital Item definition model. This opCondition defines the operational use conditions by use of at least one(1) or more predicate which is Boolean function representation language in the same manner as murCondition.

In the case of Digital Item of component level, opCondition includes transmission bit rate, resolution of video or image, sampling rate of audio, compression algorithm, key or decoding conditions if coded, transmission protocol, etc.

As described above, the present invention provides Digital Item definition model with flexibility, consistency and compatibility, considering at its maximum all the Users of electronic commerce activities in the business model and interrelation between primary technologies of MPEG-21 multimedia framework and Digital Item definition model.

For example, for the objective and role of monitoring service provider of electronic commerce business model, Digital Item definition model includes eventReport defined for event reporting which is one of primary technologies of MPEG-21 multimedia framework and userPreference required for providing information in order to satisfythe desire of consumer who can be an end user of Digital Item.

In addition, the present invention provides a model related to multi-conditions, which is divided into various conditions depending on the objective, as well as one conditions when conditions related to operation, management, use and manipulation of Digital Item.

For example, the operational conditions (for example, conditions for transmission bit rate, resolution, format, etc. of Digital Item) of Digital Item is modeled as opCondition and management and use conditions (for example, change history, use fee, use conditions) is modeled as murCondition, so that facility of management and maintenance can be improved at the time of use, management, manipulation according to definition of Digital Item.

In addition, when a Digital Item is defined in the present invention, facility of management and maintenance can be improved by employing anchor referencing the existing Digital Item as well as definition or description of metadata instance. Namely, the present invention provides model capable of giving a unique identifier to each level of Digital Item and descriptor.

For example, each Digital Item can be defined by an element in the model called anchor that has a play a role as a unique identifier far container, item and component that are a sort of layered or hierarchical Digital Item. Also, atomic component provides anchor for designating resource in the atomic level in the present invention.

In addition, the present invention suggests choice element that has configuration functions using the element selection. This choice element is required to generate desired item according to the status of networks and terminals. Particularly, this choice is defined so that it can be modeled in a recursive form depending on the order of selection procedure in order to preventing an unnecessary next choice process by having next selection affected by current choice (choice::=choice*selection+...).

For example, let's assume the price (a primary choice) and transmission rate (the secondary choice) are used as conditions of choice for any Digital Item. And if the end user of Digital Item does not agree to the primary choice (price selections), the next selection becomes unnecessary and this present model provides a mechanism to prevent such redundant choice by employing conditionally recursive form.

The present invention provides Digital Item definition model with flexibility. consistency and compatibility required in the activities of electronic commerce environmentsuch as various conditions of networks and devices (or terminal) used broadly in different forms. As a result, the present invention can minimize a possible disturbance of electronic commerce activities that can be happened among Users such as Digital Item creator, provider, distributor, consumer, patent exerciser, financial service provider, commercial supervisor, etc.

In addition, considering at maximum role relations among all the Users of the electronic commerce business models, the present invention provides an infrastructure capable of achieving a compatibility with an international standard by sufficiently considering interrelation with technologies derived from MPEG-21 in ISO/IEC SC29/WG11.

In addition, the present invention is very efficient and practical since it is applicable to any types of multimedia data by providing media type independent Digital Item definition model.

In addition, the present invention is applicable to a broad field such as Internet service, satellite communication, electronic media (DVD, PDR, PDA, etc.) related to electronic commercial transaction, mobile communication, electronic libraries, electronic photograph studios, electronic museums, etc., to be used broadly in the future.

Although the preferred embodiment of the present invention have been disclosed for illustrative purposes, those skilled in the art will appreciate that various modifications, additions and substitutions are possible, without departing from the acope and spirit of the invention as disclosed in the accompanying claims.

## Claims

1. A method of generating Digital Item for electronic commerce activities of multimedia data, comprising the steps of:
selecting resource for electronic commerce activities of multimedia data; and generating Digital Item as the unit of manipulation of electronic commerce activities for a corresponding multimedia resource defined by including anchor for designating a selected resource, descriptor for describing a corresponding item, and opCondition for describing operational use conditions of the corresponding item.

2. The method according to claim I, wherein the step of generating Digital Item as the unit of manipulation of electronic commerce activities for a corresponding multimedia resource is defined to include selectively murCondition for describing conditions related to commercial management and use rule for the corresponding item., eventReport for describing event to be reported in connection with the corresponding item, userPreference for describing user preference information on the corresponding item, or reservedMetadata for describing metadata additionally required for Digital Item definition model in the future.

3. The method according to claim 1 or 2, wherein the Digital Item consists of the lowest atomic Digital Item which is not divided into any longer and packaged Digital Item, wherein the packaged Digital Item is defined to include any sub packaged Digital Item in a recurrent package form that the atomic Digital Items arc packaged or already packaged Digital Items are again packaged, therefore each packaged Digital Item is generated in a recursive manner.

4. The method according to claim 3, wherein die packaged Digital Item is defined to include information (anchor) for designating same level of Digital Item or information (anchor) for designating lower level of Digital Item,

5. The method according to claim 3 or 4, wherein in order to construct the recurrent layered structure, the atomic Digital Item as the lowest layer is defined as component, packaged Digital Item as the middle layer including the component or any sub packaged Digital Item is defined as item, and packaged Digital Item as the highest layer including item or any sub container is defined as container.

6. The method according to claim 3 or 4, wherein in order to construct the recurrent layered structure, the atomic Digital Item as the lowest layer is defined as component, packaged Digital Item as the middle layer including the component or any sub packaged Digital Item or information (anchor) for designating that is defined as item, and packaged Digital Item as the highest layer including item or any sub container or information (anchor) for designating that is defined as container.

7. A method of generating Digital Item for electronic commerce activities of multimedia data, comprising the steps of:
selecting resource for electronic commerce activities of multimedia data;
generating component defined to include a selected resource, anchor for designating the selected resource, descriptor for describing details of the resource, opCondition for describing operational use conditions of the resource;
generating item defined to include packaged content including at least one component or item or anchor for designating that, choice for the packaged content, descriptor for describing details of the packaged content; and
generating container defined to include packaged content including at least one item or container or anchor for designating that, descriptor for describing details of the packaged content.

8. The method according to claim 7, wherein the step of generating component is defined to include selectively murCondition for describing conditions related to management and use rule for the resource, eventReport for describing event to be reported in connection with the resource, userPreferencc for describing user preference information on the resource, or reservedMetadata for describing metadata additionally required for Digital Item definition model in the future.

9. The method according to claim 7 or 8, wherein the step of generating item is defined to include selectively murCondirion for describing conditions related to management and use rule for the package content, eventReport for describing event to be reported in connection with the package content, userPreference for describing user preference information on the package content, or reservedMetadata for describing metadata additionally required for Digital Item definition model in the future.

10. The method according to one of claims 7 to 9, wherein the step of generating container is defined to include selectively murCondition for describing conditions related to management and use rule for the package content, eventReport for describing event to be reported in connection with the package content, userPreferencc for describing user preference information on the package content, or reservedMetadata for describing metadata additionally required for Digital Item definition model in the future.

11. The method according to one of claims 7 to 10, wherein the choice is defined to include recurrent form of at least zero(0) or more choice, at least zero(0) or more descriptor, at least zero(0) or more opCondition that can be used to determine whether a single selection is selected or more than one selection are selected, and at least one(l) or more selection as the object of selection.

12. The method according to claim 11, wherein the selection is defined to include predicate which is Boolean function representation language, at least zero(0) or more descriptor for describing the content of the selection, and opCondition for describing operational use conditions of the selection, as elements included to define the choice.

13. The method according to one of claims 7 to 10, wherein the choice is used for item level for the purpose of selective item configuration in order to adapt the Digital Item according to the various types of networks and terminals, or the user request, and wherein the choice is modeled in a recurrent form considering the user generally configures item through multi-steps, so layered definition of choice is required.

14. The method according to one of claims 7 to 13, wherein descriptor used for all the Digital Items, choice, selection, eventReport, userPreference, reservedMetadata, and anchor, is defined to include at least zero(0) or more existing descriptor or anchor, component capable of representing the content of descriptor or statement of text or any machine readable format for describing the content such as parent elements of descriptor to be defined, and at least zero(0) or more opCondition of describing operational conditions of descriptor.

15. The method according to one of claims 7 to 14, wherein anchor used for all Digital Items, eventReport, userPreference, reservedMetadata, and descriptor, is defined to include a reference being an identifier designating uniquely atomic Digital Item and each Digital Item, at least zero(0) or more descriptor for describing the anchor, and at least zero(0) or more opCondition for describing usage format of the anchor.

16. The method according to one of claims 7 to 15, wherein eventReport is defined to include anchor for designating a server computer for processing, managing and storing the content of reportable event report, descriptor for describing the content of event report, and murCondition for describing conditions related to management and use rule of event report content.

17. The method according to one of claims 7 to 16, wherein UserPreference is defined to include anchor for designating the existing user preference information, descriptor for describing the content of user preference information, and murCondition capable of describing management and use rule of the user preference information..

18. The method according to one of claims 7 to 17, wherein murCondition used for all the Digital Items, eventReport, userPreference, and reservedMetadata defines conditions for management and use rule of a corresponding Digital Item or definition model elements by use of at least one(l) or more predicate which is Boolean function representation language.

19. The method according to one of claims 7 to 18, wherein opCondition used for Digital Item of component level, descriptor, anchor, choice and selection defines operational use conditions for a corresponding item or definition model elements by use of at least one(l) or more predicate which is Boolean function representation language.

20. The method according to claim 19, wherein the opCondition describes conditions, for example transmission bit rate, resolution of video or image, sampling rate of audio, compression algorithm, key or decoding conditions if coded, transmission protocol, etc.

21. A method of generating Digital Item for electronic commerce activities of multimedia data, comprising the steps of:
selecting resource for electronic commerce activities of multimedia data; and
generating container, item and component as Digital Items in order to provide a selected resource as the unit of manipulation for electronic commerce activities according to the following element definitions:
(a)container::=(anchor I container)* (anchor | item)^{‡} descriptor* murCondition* eventReport^{‡} userPreference* reservedMetadata*
(b)item::=(anchor | item | component)+ choice* descriptor^{‡} murCondition* eventReport^{‡} userPreference* reservedMetadata*
(c)component::=resource anchor descriptor* murCondition* opCondition* eventReport* userPrcference* reservedMetadata*
(d) anchor::=reference descriptor* opCondition*
(e) descriptor::=(anchor | descriptor)* (component | statement) opCondition*
(f) choice:: =choice^{‡} selection+ descriptor* opCondition^{‡}
(g) selection::=predicate descriptor* opCondition*
(h) eventReport:: =anchor descriptor murCondition
(i) userPreference::=anchor descriptor murCondition
(j) reservedMetadata::=anchor descriptor murCondition
(k) murCondition::=predicate+
(l) opCondition::=predicate+

22. The method according to claim 21, wherein '*' means at least zero(0) or more,'+' means at least one(1) or more, and'|' means 'OR' logical operation.
